# EUROPÄISCHE PATENTSCHRIFT

(11) **EP 1 698 201 B1**
(45) Veröffentlichungstag und Bekanntmachung des Hinweises auf die Patenterteilung: **09.09.2009**
(21) Anmeldenummer: 04820609.8
(22) Anmeldetag: 30.11.2004
(51) Int. Cl.: H04W 28/18

(54) **Verfahren zum Betrieb einer Funkstation und einer Teilnehmerstation eines Funkkommunikationssystems sowie Funkstation und Teilnehmerstation**
Method for operating a radio station and a subscriber station of a radio communication system, and corresponding radio station and subscriber station
Procédé permettant de faire fonctionner une station de radiodiffusion et un poste d'abonné d'un système de radiocommunication, et station de radiodiffusion et poste d'abonné correspondants

(30) Priorität: 22.12.2003 DE 10360533
(43) Veröffentlichungstag der Anmeldung: 06.09.2006
(73) Patentinhaber: Nokia Siemens Networks GmbH & Co. KG, 81541 München (DE)
(72) Erfinder: CHARPENTIER, Frederic, 10115 Berlin (DE); DÖTTLING, Martin, 85579 Neubiberg (DE); GRUNDLER, Thomas, 71638 Ludwigsburg (DE); MECKING, Michael, 80335 München (DE); VIERING, Ingo, 81539 München (DE)
(86) Internationale Anmeldenummer: PCT/EP2004/053178
(87) Internationale Veröffentlichungsnummer: WO 2005/062648

(56) Entgegenhaltungen:
- 3GPP: "3rd Generation Partnership Project; Technical Specification Group Radio Access Network; Feasibility Study for Enhanced Uplink for UTRA FDD (Release 6)" 3GPP TR 25.896 V1.1.2, 5. Dezember 2003 (2003-12-05), Seiten 1-115, XP002321679 Gefunden im Internet: URL:www.3gpp.org/ftp/Specs/archive/25_seri es/25.896/25896-112.zip> [gefunden am 2005-03-17]
- MECKING M ED - INSTITUTE OF ELECTRICAL AND ELECTRONICS ENGINEERS: "Resource allocation for fading multiple-access channels with partial channel state information" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY : IEEE, US, Bd. VOL. 1 OF 5, 28. April 2002 (2002-04-28), Seiten 1419-1423, XP010589722 ISBN: 0-7803-7400-2 in der Anmeldung erwähnt
- SIEMENS: "EUDTCH Considerations" 3GPP TSG-RAN WG 130, 10. Januar 2003 (2003-01-10), Seiten 1-4, XP002321680 SAN DIEGO, USA Gefunden im Internet: URL:ftp.3gpp.org/tsg_ran/WG1_RL1/TSGR1_30/ Docs/Zips/r1-030023.zip> [gefunden am 2005-03-17]

## Beschreibung

Die Erfindung betrifft ein Verfahren zum Betrieb einer Funkstation und einer Teilnehmerstation eines Funkkommunikationssystems sowie eine entsprechende Funkstation und eine entsprechende Teilnehmerstation.

Es hat sich gezeigt, dass in Funkkommunikationssystemen große Verbesserungen für Übertragungen in Abwärtsrichtung (downlink: DL) erreicht werden können, wenn diese Übertragungen verbindungsabhängig geplant werden (link-adaptive scheduling). Bei derartig geplanten Übertragungen in Abwärtsrichtung tauscht eine Basisstation Daten nur mit denjenigen Teilnehmerstationen aus, die im Moment der Übertragung gute Übertragungsbedingungen, d.h. einen guten Übertragungskanal haben. Auf diese weise wird eine geringere Sendeleistung benötigt, da bei schlechten Übertragungsbedingungen beispielsweise große Pfadverluste durch eine höhere Sendeleistung ausgeglichen werden. Weiterhin werden aufgrund der geringeren Sendeleistung weniger Interferenzen erzeugt. Verbindungsabhängig gesteuerte Übertragungen in Abwärtsrichtung unterbrechen beispielsweise ihre Übertragung zu Zeiten großer Pfadverluste und setzen die Übertragung fort, wenn die Übertragungsbedingungen besser sind.

Eine von der Verbindungsqualität abhängige Übertragungsstrategie verursacht jedoch zusätzliche Verzögerungen bei der Übertragung. Aus diesem Grund ist die Anwendung dieser Art der Übertragung meist auf Dienste beschränkt, deren Daten nicht in Echtzeit übertragen werden müssen. Eine von der Verbindungsqualität abhängige Übertragungsstrategie sollte daher so gestaltet werden, dass sie einen vernünftigen Kompromiss zwischen Datendurchsatz, zugewiesenen Ressourcen und Fairness unter den von der Basisstation versorgten Teilnehmerstationen sicherstellt. Eine reine Fokussierung auf Datendurchsatz würde Teilnehmerstationen benachteiligen, die weit von der Basisstation entfernt sind. Andererseits würde eine faire Behandlung, d.h. eine Gleichbehandlung aller Teilnehmerstationen den Gesamtdatendurchsatz vermindern, da in diesem Fall auch zahlreichen Teilnehmerstationen mit schlechten Übertragungsbedingungen Ressourcen zugewiesen werden.

Eine von der Übertragungsqualität abhängige Übertragungsstrategie erfordert den Austausch einer großen Menge von Signalisierungsdaten zwischen der Basisstation und den von der Basisstation versorgten Teilnehmerstationen. Die Basisstation muss den Übertragungskanal für jede Teilnehmerstation ausmessen und jede Teilnehmerstation mit einer entsprechenden Rückmeldung versorgen. Sowohl die Basisstation als auch jede der Teilnehmerstationen müssen zu jeder Zeit über die gleiche Information bezüglich der Verwendung von Übertragungsparametern, wie beispielsweise eine Kanalcodierung, eine Sendeleistung, ein Modulationsverfahren oder einen verwendeten Spreizfaktor, verfügen. Von Vorteil wäre es jedoch, wenn eine derartige Signalisierung möglichst wenig Datenaustausch erforderte, da dann eine möglichst große spektrale Effizienz erreicht wird.

Zurzeit wird in der 3GPP (3rd Generation Partnership Project) darüber diskutiert einen Übertragungskanal pro Teilnehmer für eine verbesserte Übertragung in Aufwärtsrichtung (uplink: UL) einzurichten. Ein derartiger Übertragungskanal wird beispielsweise als EUDTCH (Enhanced Uplink Dedicated Transport Channel) bezeichnet. Eine Übertragungsstrategie für diesen Übertragungskanal soll beispielsweise ähnlich wie bei der als HSDPA (High Speed Downlink Packet Access) bezeichneten Übertragung in Abwärtsrichtung in Abhängigkeit von der Übertragungsqualität erfolgen.

In Michael Mecking, "Resource Allocation for Fading Multiple-Access Channels with Partial Channel State Information", Proc. IEEE International Conference on Communications, New York, April 2002, haben mobile Teilnehmer jeweils eine Verbindung mit einer Basisstation. Anhand einer Information über die Übertragungsqualität aller mobilen Teilnehmer in Aufwärtsrichtung kann jeder mobile Teilnehmer seine eigene Sendeleistung für nachfolgende Übertragungen berechnen, sofern ihm die Varianz des Rauschens der Basisstation sowie die Fading-Eigenschaften der Verbindungen aller anderen mobilen Teilnehmer bekannt sind.

Der Technische Report "3rd Generation Partnership Project; Technical Specification Group Radio Access Network; Feasibility Study for Enhanced Uplink for UTRA FDD (Release 6)" vom 05.12.2003 offenbart Möglichkeiten zur Verbesserung der Abdeckung, des Durchsatzes und zur Verminderung von Verzögerungen von aufwärtsgerichteten dedizierten Transportkanälen.

Die Erfindung hat die Aufgabe, ein Verfahren zum Betrieb einer Funkstation und einer Teilnehmerstation sowie eine Funkstation und eine Teilnehmerstation anzugeben, die es mit geringem Signalisierungsaufwand ermöglichen, je nach Übertragungsqualität eines verwendeten Übertragungskanals, bestimmte Übertragungsparameter für eine Übertragung von der Teilnehmerstation zur Funkstation zu verwenden.

Diese Aufgabe wird mit den Verfahren sowie der Funkstation und der Teilnehmerstation gemäß den unabhängigen Ansprüchen gelöst.

Vorteilhafte Weiterbildungen der Erfindung sind Gegenstand der abhängigen Ansprüche.

Bei dem erfindungsgemäßen Verfahren zum Betrieb einer Funkstation eines Funkkommunikationssystems sendet die Funkstation eine Information über wenigstens zwei Werte eines Übertragungsparameters an eine erste Teilnehmerstation für nachfolgende Datenübertragungen der ersten Teilnehmerstation. Erfindungsgemäß empfängt die Funkstation erste Signale von der ersten Teilnehmerstation über eine Funkschnittstelle und bestimmt ein Maß für die Übertragungsqualität anhand der ersten Signale. Es liegt im Rahmen der Erfindung, dass die Funkstation eine erste Information an die erste Teilnehmerstation für eine Auswahl eines der Werte des Übertragungsparameters sendet, wobei die erste Information die Übertragungsqualität der ersten Signale berücksichtigt.

Ein Maß für die Übertragungsqualität ist beispielsweise eine Bitfehlerrate (BER: bit error rate), eine Blockfehlerrate (BLER: block error rate), eine Rahmenfehlerrate (FER: frame error rate), ein Signal-zu-Rauschen-Verhältnis (SNR: signal to noise ratio)oder ein Signal-zu-Interferenz-Verhältnis (SIR: signal to interference ratio). Mit der Information über die wenigstens zwei Werte des Übertragungsparameters können die wenigstens zwei Werte selbstverständlich sowohl explizit als auch implizit signalisiert werden. Bei einer impliziten Signalisierung ordnet die erste Teilnehmerstation der Information die wenigstens zwei Werte beispielsweise anhand einer Tabelle zu.

Durch die Festlegung von wenigstens zwei auswählbaren Werten des Übertragungsparameters vor der nachfolgenden Datenübertragung anhand der Information über die wenigstens zwei Werte und die Auswahl eines der Werte anhand der ersten Information, ist es nicht mehr erforderlich, dass die erste Teilnehmerstation den von ihr zu verwendenden Wert des Übertragungsparameters wiederholt selbst berechnet oder in Form einer expliziten Signalisierung vor jeder Übertragung von der Funkstation empfängt. Im Vergleich zu einer expliziten Signalisierung des nachfolgend zu verwendenden Wertes des Übertragungsparameters, kann die erste Information weniger Daten (Bits) enthalten und erfordert somit einen geringeren Signalisierungsaufwand, d.h. sie benötigt weniger Übertragungsressourcen. Unter Übertragungsressourcen sollen beispielsweise eine Kanalcodierung, ein Spreiz- oder Verwürflungscode, die verwendete Sendeleistung, die verwendete Frequenz und/oder die für die Übertragung benötigte Zeit [z.B. eine Anzahl von Zeitschlitzen in einem Funkkommunikationssystem mit TDD (Time Division Duplex)] verstanden werden.

Werden der ersten Teilnehmerstation Informationen über wenigstens jeweils zwei Werte für mehrere Übertragungsparameter von der Funkstation gesendet, so ermöglicht die Erfindung, dass die Teilnehmerstation anhand der ersten Information für jeden der Übertragungsparameter einen Wert auswählt. Der ersten Information kann somit eine Kombination von Werten von Übertragungsparametern zugeordnet werden. Je nach Übertragungsqualität, d.h. je nach Inhalt der ersten Information wählt die erste Teilnehmerstation eine entsprechende Kombination von Werten von Übertragungsparametern aus.

In einer bevorzugten weiterbildung der Erfindung wird die erste Information aus einem Bit gebildet. So kann beispielsweise ein Wert (Bitwert) der ersten Information dem ersten Wert des Übertragungsparameters zugeordnet sein, während der andere Wert dem zweiten Wert des Übertragungsparameters zugeordnet ist. Die erste Teilnehmerstation kann somit anhand eines einzelnen Bits entscheiden, welchen der Werte des Übertragungsparameters sie für eine nachfolgende Datenübertragung verwendet.

Mit Vorteil bestimmt die Funkstation die erste Information anhand eines Vergleichs des Maßes für die Übertragungsqualität der ersten Signale mit einem Grenzwert. Die Auswahl eines der Werte des Übertragungsparameters durch die erste Teilnehmerstation hängt somit vom Über- bzw. Unterschreiten eines bestimmten Wertes durch das Maß für die Übertragungsqualität ab. Beispielsweise kann die erste Teilnehmerstation bei Überschreiten des Grenzwertes, d.h. nach Empfang einer entsprechenden ersten Information, nachfolgend Daten mit bestimmten Übertragungsparametern senden, während sie beim Unterschreiten des Grenzwertes nachfolgend andere Übertragungsparameter verwendet.

Eine Weiterbildung der Erfindung sieht vor, dass bei einem bestimmten Inhalt der ersten Information nachfolgend keine Datenübertragung der ersten Teilnehmerstation erfolgt. Beispielsweise kann es sich bei dem Übertragungsparameter um die Sendeleistung handeln und der Bitwert "0" der ersten Information kann einem Sendeleistungswert "0" zugeordnet sein. Diese Zuordnung ermöglicht, dass die erste Teilnehmerstation nur dann Daten überträgt, wenn die Übertragungsqualität einen Mindestwert hat.

Vorteilhafter Weise sendet die Funkstation wiederholt die Information über wenigstens zwei Werte des Übertragungsparameters und die erste Information, wobei die Wiederholrate der Information über wenigstens zwei Werte des Übertragungsparameters kleiner ist als die Wiederholrate der ersten Information. Auf diese Weise wird eine schnelle Änderung des ausgewählten Wertes des Übertragungsparameters anhand der ersten Information ermöglicht, während die zur Auswahl stehenden Werte vergleichsweise selten geändert werden. Dies führt beispielsweise dazu, dass die Signalisierungslast auf der Funkschnittstelle möglichst gering ausfällt, da die Übertragung der ersten Information im Vergleich zu der Übertragung der auswählbaren Werte des Übertragungsparameters weniger Bits und somit weniger Übertragungsressourcen benötigt.

Eine alternative Ausgestaltung der Erfindung sieht vor, dass die Funkstation zweite Signale von wenigstens einer zweiten Teilnehmerstation empfängt und anhand der zweiten Signale ein Maß für die Übertragungsqualität der zweiten Signale bestimmt. Weiterhin ist vorgesehen, dass die Funkstation eine zweite Information an die erste Teilnehmerstation für eine Auswahl eines der Werte des Übertragungsparameters in Abhängigkeit von sowohl der ersten als auch der zweiten Information sendet, wobei die zweite Information die Übertragungsqualität der zweiten Signale berücksichtigt.

Die Auswahl eines der Werte des Übertragungsparameters kann somit nicht nur von der Übertragungsqualität der ersten Teilnehmerstation abhängig gemacht werden, sondern zusätzlich die Übertragungsqualität der zweiten Teilnehmerstation berücksichtigen.

Für diese alternative Ausgestaltung der Erfindung ist es im Sinne einer geringen Signalisierungslast von Vorteil, wenn die erste und zweite Information jeweils aus einem Bit gebildet werden.

Weiterhin ist es vorteilhaft, wenn die Funkstation die erste und zweite Information jeweils anhand eines Vergleichs des entsprechenden Maßes für die Übertragungsqualität mit einem Grenzwert bestimmt.

Mit dem gleichen Vorteil wie bereits für die erste Ausgestaltung der Erfindung beschrieben, sendet die Funkstation wiederholt die Information über wenigstens zwei Werte des Übertragungsparameters sowie die erste Information und die zweite Information, wobei die Wiederholrate der Information über wenigstens zwei Werte des Übertragungsparameters kleiner ist, als die Wiederholrate der ersten Information und die Wiederholrate der zweiten Information. Selbstverständlich können die Wiederholraten der ersten und zweiten Information sowohl gleich al auch unterschiedlich sein.

Vorteilhafterweise wird der Wert des Grenzwertes der Funkstation von einer Netzeinrichtung vorgegeben. Die Netzeinrichtung kann Informationen nutzen, beispielsweise über weitere Teilnehmerstationen, die von anderen Funkstationen versorgt werden, um den Grenzwert zu berechnen.

Eine bevorzugte Weiterbildung sieht vor, dass der Wert des Grenzwertes in Abhängigkeit von der Anzahl von der Funkstation empfangener Teilnehmerstationen festgelegt wird. Beispielsweise kann der Grenzwert umso größer gewählt werden, je mehr Teilnehmerstationen von der Funkstation versorgt werden. Wird beispielsweise mehreren Teilnehmerstationen die gleiche Information über Werte des Übertragungsparameters von der Funkstation gesendet, so kann durch eine entsprechende Wahl des Grenzwertes in Abhängigkeit von der Anzahl empfangener Teilnehmerstationen erreicht werden, dass die Anzahl von Teilnehmerstationen begrenzt wird, die aufgrund der gleichen ersten Information den gleichen Wert des Übertragungsparameters auswählt. Insbesondere kann mit einem mit der Anzahl empfangener Teilnehmerstationen zunehmenden Grenzwert verhindert werden, dass eine Anzahl von gleichzeitig sendenden Teilnehmerstationen mit wachsender Zahl empfangener Teilnehmerstationen zunimmt. Interferenzen können somit reduziert werden.

Besonders vorteilhaft ist weiterhin, wenn die Funkstation die Information über wenigstens zwei Werte des Übertragungsparameters in Abhängigkeit vom Wert des Grenzwertes und/oder in Abhängigkeit von der Anzahl von der Funkstation empfangener Teilnehmerstationen und/oder in Abhängigkeit vom Rauschniveau oder Interferenzniveau der Funkstation und/oder der mittleren Übertragungsqualität aller empfangener Teilnehmerstationen festlegt. Auf diese Weise lassen sich die wenigstens zwei auswählbaren Werte des Übertragungsparameters möglichst flexibel an aktuelle Übertragungsbedingungen anpassen.

Es ist von Vorteil, wenn die Funkstation allen von ihr empfangenen Teilnehmerstationen die gleiche Information über wenigstens zwei Werte des Übertragungsparameters sendet.

Vorteilhafterweise werden Pilotsignale als Signale zur Bestimmung eines Maßes für die Übertragungsqualität empfangen.

Bei dem erfindungsgemäßen Verfahren zum Betrieb einer ersten Teilnehmerstation in einem Funkkommunikationssystem empfängt die erste Teilnehmerstation eine Information über wenigstens zwei Werte eines Übertragungsparameters für nachfolgende Datenübertragungen der ersten Teilnehmerstation von einer Funkstation. Erfindungsgemäß sendet die erste Teilnehmerstation erste Signale zum Bestimmen eines Maßes für die Übertragungsqualität anhand der ersten Signale an die Funkstation über eine Funkschnittstelle und empfängt eine erste Information von der Funkstation für eine Auswahl eines der Werte des Übertragungsparameters, wobei die erste Information die Übertragungsqualität der ersten Signale berücksichtigt.

Die Funkstation sowie die Teilnehmerstation weisen alle Merkmale auf, die zur Durchführung der erfindungsgemäßen Verfahren benötigt werden. Insbesondere sind in der erfindungsgemäßen Funkstation und der erfindungsgemäßen Teilnehmerstation Mittel vorhanden, die zur Durchführung der erfindungsgemäßen Verfahrensschritte oder Verfahrensvarianten verwendet werden.

Die Erfindung wird im Folgenden anhand von in den Figuren dargestellten Ausführungsbeispielen näher erläutert. Es zeigen:
- Fig. 1: ein erstes Ausführungsbeispiel eines erfindungsgemäßen Verfahrens und
- Fig. 2: ein zweites Ausführungsbeispiel eines erfindungsgemäßen Verfahrens.

Gleiche Bezugszeichen in den Figuren bezeichnen gleiche Gegenstände.

Eine Teilnehmerstation ist beispielsweise ein Mobiltelefon oder auch eine ortsbewegliche oder ortsfeste Vorrichtung zur Übertragung von Bild- und/oder Tondaten, zum Fax-, Short-Message-Service SMS- und/oder E-Mail-Versand und/oder zum Internetzugang.

Eine Funkstation ist beispielsweise eine Basisstation eines zellularen Funkkommunikationssystems, ein Zugangspunkt (Access Point) eines drahtlosen Netzes (W-LAN: Wireless Local Area Network) oder auch eine Teilnehmerstation beispielsweise in einem Adhoc-Netz. Nachfolgend wird als Funkstation eine Basisstation betrachtet, ohne damit jedoch zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM- (Global System for Mobile Communications) oder dem UMTS- (Universal Mobile Telecommunications System Standard). Auch zukünftige Mobilfunksysteme, beispielsweise der vierten Generation, sowie Adhoc-Netze sollen unter Funkkommunikationssystemen verstanden werden. Funkkommunikationssysteme sind beispielsweise auch drahtlose lokale Netze (W-LANs), beispielsweise gemäß den Standards IEEE (Institut of Electrical and Electronical Engineers) 802.11a-i sowie HiperLAN 1 und HiperLAN 2 (Hiperlan: High Performance Radio Local Area Network), und Blootooth-Netze.

Im Folgenden wird die Erfindung am Beispiel eines Mobilfunksystems nach dem UMTS-Standard beschrieben, ohne jedoch damit zum Ausdruck bringen zu wollen, dass die Erfindung hierauf beschränkt sein soll.

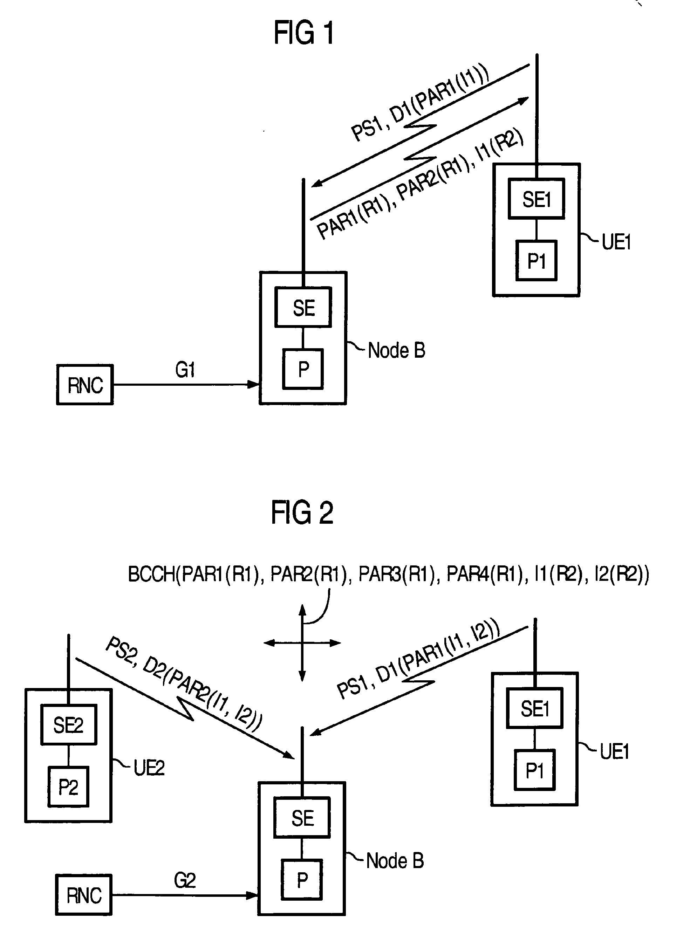

Figur 1 zeigt schematisch ein erstes Ausführungsbeispiel zum erfindungsgemäßen Betrieb einer Basisstation und einer Teilnehmerstation in einem Funkkommunikationssystem. Eine Basisstation NodeB weist eine Sende- und Empfangseinheit SE zum Empfangen und zum Senden von Signalen auf. Die Sende- und Empfangseinheit SE wird von einer Steuereinheit P, beispielsweise einem Prozessor, gesteuert. Die Basisstation NodeB sendet über eine Funkschnittstelle wiederholt einen ersten Wert PAR1 und einen zweiten Wert PAR2 eines Übertragungsparameters an eine erste Teilnehmerstation UE1. Die beiden Werte PAR1, PAR2 des Übertragungsparameters sendet die Basisstation Node B mit einer ersten Wiederholrate R1 an die erste Teilnehmerstation UE1. Selbstverständlich kann die Basisstation NodeB die beiden Werte PAR1, PAR2 des Übertragungsparameters auch implizit signalisieren.

Unter Übertragungsparameter ist beispielsweise eine Sendeleistung, ein Spreizfaktor, eine Codierrate oder ein Modulationsalphabet zu verstehen. Selbstverständlich ermöglicht die Erfindung auch, dass die Basisstation NodeB für mehrere Übertragungsparameter jeweils wenigstens zwei Werte an die erste Teilnehmerstation UE1 sendet.

Die erste Teilnehmerstation UE1 weist eine erste Sende- und Empfangseinheit SE1 zum Senden und Empfangen von Signalen auf. Beispielsweise dient die Sende- und Empfangseinheit SE1 zum Empfangen der Werte PAR1, PAR2 des Übertragungsparameters. Die erste Sende- und Empfangseinheit SE1 wird durch einen ersten Prozessor P1 gesteuert. Die erste Teilnehmerstation UE1 sendet erste Pilotsignale PS1 über die Funkschnittstelle an die Basisstation NodeB.

Die ersten Pilotsignale PS1 können gemeinsam mit anderen Signalen, beispielsweise mit Nutzdaten, gesendet werden. Bei den ersten Pilotsignalen PS1 handelt es sich beispielsweise um Signale oder Signalfolgen, die der Basisstation NodeB bekannt sind. Insbesondere kann der Basisstation NodeB auch die Sendeleistung bekannt sein, die die erste Teilnehmerstation UE1 zum Senden der ersten Pilotsignale PS1 verwendet.

Durch Messen der Empfangsleistung der ersten Pilotsignale PS1 und/oder durch Vergleich der empfangenen ersten Pilotsignale PS1 mit entsprechenden Referenzsignalen, die in der Basisstation NodeB gespeichert sind, bestimmt die Basisstation NodeB ein Maß für die Übertragungsqualität für eine Übertragung von der ersten Teilnehmerstation UE1 über die Funkschnittstelle an die Basisstation NodeB. Das derart bestimmte Maß für die Übertragungsqualität vergleicht die Basisstation NodeB mit einem ersten Grenzwert G1. Anhand des Vergleichs mit dem ersten Grenzwert G1 legt die Basisstation NodeB eine erste Information I1 fest. Die erste Information I1 hat als einen ersten Wert beispielsweise einen Bitwert "1", falls das ermittelte Maß für die Übertragungsqualität den ersten Grenzwert G1 überschreitet und einen zweiten Bitwert "0", falls das ermittelte Maß für die Übertragungsqualität den ersten Grenzwert G1 unterschreitet. In diesem Ausführungsbeispiel ist das Maß für die Übertragungsqualität größer als der erste Grenzwert G1 und der Bitwert der ersten Information ist "1".

Die erste Information I1 sendet die Basisstation NodeB mit einer zweiten Wiederholrate R2 an die erste Teilnehmerstation UE1. Die erste Teilnehmerstation UE1 verwendet die erste Information I1 um aus den beiden Werten PAR1, PAR2 des Übertragungsparameters den ersten Wert PAR1 auszuwählen, der dem Bitwert "1" zugeordnet ist. Dem Bitwert "0" ist der zweite Wert PAR2 des Übertragungsparameters zugeordnet. Nachfolgend überträgt die erste Teilnehmerstation UE1 erste Daten D1 unter Verwendung des ersten Wertes PAR1 des Übertragungsparameters.

Durch das in Klammersetzen von Bezugszeichen in Figur 1 wird dargestellt, dass die durch vor der Klammer stehende Bezugszeichen repräsentierten Merkmale bzw. Werte mit den in Klammern gesetzten Merkmalen in Zusammenhang stehen. Die Klammersetzung hinter dem Bezugszeichen D1 der ersten Daten zeigt beispielsweise an, dass die ersten Daten D1 unter Verwendung des ersten Wertes PAR1 des Übertragungsparameters übertragen werden, und dass der erste Wert PAR1 des Übertragungsparameters in Abhängigkeit von der ersten Information I1 ausgewählt wurde.

Die Erfindung ermöglicht vorteilhaft, dass durch die Verwendung eines einzigen Bits, das in Form der ersten Information I1 übertragen wird, nachfolgend ein Wert des Übertragungsparameters für die Übertragung der ersten Daten D1 von der ersten Teilnehmerstation UE1 an die Basisstation NodeB ausgewählt wird. Selbstverständlich kann die erste Information I1 auch mehr als ein Bit umfassen und somit zur Auswahl von mehr als zwei werten des Übertragungsparameters verwendet werden.

Beispielsweise kann der Übertragungsparameter die Sendeleistung sein, mit der die erste Teilnehmerstation UE1 die ersten Daten D1 überträgt. Wird beispielsweise durch den zweiten Wert PAR2 die Sendeleistung auf "0" gesetzt, so wird erreicht, dass die erste Teilnehmerstation UE1 bei einem Unterschreiten des ersten Grenzwertes G1 keine Daten an die Basisstation NodeB sendet.

Werden für mehrere Übertragungsparameter jeweils wenigstens ein erster und ein zweiter Wert von der Basisstation NodeB an die erste Teilnehmerstation UE1 gesendet, so wird beispielsweise durch einen Bitwert "1" der ersten Information I1 jeweils der erste Wert jedes Übertragungsparameters von der ersten Teilnehmerstation UE1 ausgewählt, während durch den Bitwert "0" jeweils der zweite Wert jedes Übertragungsparameters ausgewählt wird. Auf diese weise kann durch das Übertragen eines einzigen Bits gleichzeitig jeweils ein Wert für mehrere Übertragungsparameter von der ersten Teilnehmerstation UE1 ausgewählt werden.

Die zweite Wiederholrate R2 wird größer gewählt als die erste Wiederholrate R1. Auf diese Weise wird eine zweistufige Regelung des Übertragungsparameters ermöglicht. Schnellen Änderungen in der Übertragungsqualität, d.h. unterschiedlichen Werten der ersten Information I1, kann durch eine hohe Wiederholrate für die Übertragung der ersten Information I1 Rechnung getragen werden. Die zur Auswahl stehenden Werte des Übertragungsparameters, d.h. der erste und zweite Wert PAR1, PAR2, können auf einer langsameren Zeitskala geändert werden, da sie üblicherweise nur von langsam veränderlichen Größen, beispielsweise von einer mittleren Übertragungsqualität, abhängen.

In diesem Ausführungsbeispiel wird der erste Grenzwert G1 der Basisstation NodeB durch einen Funknetzkontroller RNC mitgeteilt. Dies hat den Vorteil, dass der erste Grenzwert G1 von Informationen abhängen kann, die der Basisstation NodeB nicht bekannt sind. Beispielsweise verfügt der Funknetzkontroller RNC auch über Informationen über Verbindungen, die weitere Basisstationen mit der ersten Teilnehmerstation UE1 und/oder weiteren Teilnehmerstationen haben. Selbstverständlich kann der erste Grenzwert G1 auch von der Basisstation NodeB selbst ermittelt und/oder festgelegt werden.

In einem nicht dargestellten Ausführungsbeispiel hat die Basisstation NodeB gleichzeitig Verbindungen mit mehreren Teilnehmerstationen, denen sie jeweils wenigsten zwei Werte wenigstens eines Übertragungsparameters signalisiert. Weiterhin sendet die Basisstation auch den weiteren Teilnehmerstationen jeweils eine, der ersten Information entsprechende, teilnehmerstationsspezifische Information zur Auswahl eines der Werte des Übertragungsparameters. Beispielsweise verwenden die Teilnehmerstationen bei gleichen Bitwerten der jeweiligen Information den gleichen Wert des Übertragungsparameters.

Figur 2 zeigt schematisch ein zweites Ausführungsbeispiel der Erfindung. Die Basisstation NodeB sendet auf einem Rundsendekanal BCCH den ersten und zweiten Wert PAR1, PAR2 sowie einen dritten und einen vierten Wert PAR3, PAR4 des Übertragungsparameters mit der ersten Wiederholrate R1. Die Basisstation NodeB empfängt, wie bereits anhand von Figur 1 beschrieben, von der ersten Teilnehmerstation UE1 erste Pilotsignale PS1. Von einer zweiten Teilnehmerstation UE2, die eine zweite Sende- und Empfangseinheit SE2 aufweist, die von einem zweiten Prozessor P2 gesteuert wird, empfängt die Basisstation NodeB zweite Pilotsignale PS2. Anhand der ersten und zweiten Pilotsignale PS1, PS2 bestimmt die Basisstation NodeB jeweils ein Maß für die Übertragungsqualität für Übertragungen der ersten und der zweiten Teilnehmerstation UE1, UE2. Durch einen Vergleich des Maßes für die Übertragungsqualität der ersten Teilnehmerstation UE1 mit einem zweiten Grenzwert G2 ermittelt die Basisstation Node B die erste Information I1 in gleicher Weise wie bereits anhand von Figur 1 beschrieben. Auch das Maß für die Übertragungsqualität für Übertragungen der zweiten Teilnehmerstation UE2 wird mit dem zweiten Grenzwert G2 verglichen und aus dem Vergleich wird eine zweite Information 12 in einer der Ermittlung der ersten Information I1 entsprechenden Weise ermittelt.

Die Basisstation NodeB sendet die derart ermittelte erste und zweite Information I1, 12 auf dem Rundsendekanal BCCH jeweils mit der zweiten Wiederholrate R2. Sowohl die Werte PAR1, PAR2, PAR3, PAR4 des Übertragungsparameters als auch die erste und die zweite Information I1, I2 werden von der ersten Teilnehmerstation UE1 und der zweiten Teilnehmerstation UE2 empfangen. Selbstverständlich kann die Basisstation NodeB die erste und zweite Information I1, I2 auch mit unterschiedlichen Wiederholraten übertragen. Insbesondere ist es günstig die erste oder zweite Information I1, 12 nur dann zu übertragen, wenn sich der jeweilige Wert gegenüber einer vorhergehenden Übertragung verändert hat.

Beide Teilnehmerstationen UE1, UE2 wählen in Abhängigkeit von sowohl der ersten Information I1 als auch der zweiten Information I2 einen Wert PAR1, PAR2, PAR3, PAR4 des Übertragungsparameters aus. Beispielsweise hat die erste Information I1 den Bitwert "1", d.h. das Maß für die Übertragungsqualität der ersten Teilnehmerstation UE1 ist beispielsweise größer als der zweite Grenzwert G2, während die zweite Information 12 den Bitwert "0" hat, d.h. das Maß für die Übertragungsqualität der zweiten Teilnehmerstation UE2 ist geringer als der zweite Grenzwert G2. Für diese Bitkombination der ersten und zweiten Information I1, I2 wählt die erste Teilnehmerstation UE1 den ersten Wert PAR1 des Übertragungsparameters für die nachfolgende Übertragung der ersten Daten D1 aus. Die zweite Teilnehmerstation UE2 wählt anhand dieser Bitkombination den zweiten Wert PAR2 des Übertragungsparameters für eine nachfolgende Übertragung von zweiten Daten D2 an die Basisstation NodeB aus. Eine Auswahl anderer Werte des Übertragungsparameters erfolgt bei anderen Bitkombinationen der ersten und zweiten Information I1, I2. Jeder Bitkombination ist einer der Werte PAR1, PAR2, PAR3, PAR4 des Übertragungsparameters zugeordnet. Durch die Erfindung wird ermöglicht, dass beide Teilnehmerstationen UE1, UE2 bei einer bestimmten Bitkombination entweder den gleichen Wert oder unterschiedliche Werte des Übertragungsparameters auswählen. Eine Zuordnung von Bitkombinationen zu Werten PAR1, PAR2, PAR3, PAR4 des Übertragungsparameters erfolgt beispielsweise anhand einer in jeder Teilnehmerstation UE1, UE2 gespeicherten Tabelle. Die Tabelle kann beispielsweise von der Basisstation NodeB an die Teilnehmerstationen UE1, UE2 gesendet und somit jederzeit durch eine neue Tabelle mit geänderten Zuordnungen ersetzt werden.

Selbstverständlich kann die Basisstation NodeB sowohl über den Rundsendekanal BCCH als auch jeweils über dedizierte Übertragungskanäle den beiden Teilnehmerstationen UE1, UE2 unterschiedliche Werte des Übertragungsparameters signalisieren.

Die Auswahl eines Wertes des Übertragungsparameters kann wie in Figur 2 von der Bitkombination der ersten und zweiten Information I1, I2 abhängen. Überträgt eine Vielzahl von Teilnehmerstationen, beispielsweise 100 Teilnehmerstationen, Daten an die Basisstation NodeB, kann die Auswahl eines Wertes von dem Bitwert, d.h. derjenigen Information, welche die eigene Übertragungsqualität der entsprechenden Teilnehmerstation betrifft und zusätzlich von der Gesamtanzahl von Bitwerten (Informationen) abhängen, die eine Übertragungsqualität repräsentieren, die größer ist als der zweite Grenzwert G2.

Selbstverständlich kann die Basisstation NodeB den beiden in Figur 2 dargestellten Teilnehmerstationen UE1, UE2 auch über den Rundsendekanal BCCH eine Funktion für die Auswahl eines Wertes des Übertragungsparameters signalisieren. Die Teilnehmerstationen, UE1, UE2 berechnen dann anhand der ersten und zweiten Information I1, I2 den jeweils zu verwendenden Wert des Übertragungsparameters. Weiterhin ermöglicht die Erfindung, dass die Basisstation NodeB den beiden Teilnehmerstation UE1 auch über jeweils einen dedizierten Übertragungskanal jeweils eine individuelle, d.h. teilnehmerstationsspezifische Funktion für die jeweilige Auswahl bzw. Berechnung eines Wertes des Übertragungsparameters signalisiert.

Der zweite Grenzwert G2 wird im zweiten Ausführungsbeispiel ebenso wie im ersten Ausführungsbeispiel der Basisstation NodeB durch den Funknetzkontroller RNC mitgeteilt. Da in Figur 2 mehr Teilnehmerstationen eine Verbindung mit der Basisstation NodeB haben als in Figur 1, wird der zweite Grenzwert G2 beispielsweise größer als der erste Grenzwert G1 gewählt.

Selbstverständlich kann die Erfindung auch für Übertragungen in Abwärtsrichtung, d.h. im Downlink, verwendet werden. In diesem Fall messen alle Teilnehmerstationen einer Basisstation jeweils Ihre Empfangsqualität, vergleichen diese mit einem gegebenenfalls teilnehmerstationsspezifischen Grenzwert und senden jeweils eine 1-Bit-Information an die Basisstation. Der jeweiligen 1-Bit-Information entnimmt die Basisstation, ob die jeweilige Teilnehmerstation den entsprechenden Grenzwert über- oder unterschreitet und wählt daraufhin jeweils einen oder mehrere Übertragungsparameter für eine nachfolgende Datenübertragung an die entsprechende Teilnehmerstation aus. Die zur Auswahl stehenden Werte von Übertragungsparametern legt die Basisstation entweder selbst fest oder erhält sie von einem die Basisstation mit einem Kernnetz verbindenden Funknetzkontroller.

## Patentansprüche

1. Verfahren zum Betrieb einer Funkstation (NodeB) eines Funkkommunikationssystems, bei dem
- die Funkstation (NodeB) eine Information über wenigstens zwei Werte (PAR1, PAR2, PAR3, PAR4) eines Übertragungsparameters an eine erste Teilnehmerstation (UE1) für nachfolgende Datenübertragungen der ersten Teilnehmerstation (UE1) sendet,
- die Funkstation (NodeB) erste Signale (PS1) von der ersten Teilnehmerstation (UE1) über eine Funkschnittstelle empfängt und ein Maß für die Übertragungsqualität anhand der ersten Signale (PS1) bestimmt,
- die Funkstation (NodeB) eine erste Information (I1) an die erste Teilnehmerstation (UE1) sendet, damit die erste Teilnehmerstation (UE1) eine Auswahl eines der Werte (PAR1, PAR2, PAR3, PAR4) des Übertragungsparameters anhand der ersten Information (I1) durchführt, wobei die erste Information (I1) die Übertragungsqualität der ersten Signale (PS1) berücksichtigt.

2. Verfahren nach Anspruch 1, bei dem
die erste Information (I1) aus einem Bit gebildet wird.

3. Verfahren nach einem der vorstehenden Ansprüche, bei dem die Funkstation (NodeB) die erste Information (I1) anhand eines Vergleichs des Maßes für die Übertragungsqualität der ersten Signale (PS1) mit einem Grenzwert (G1) bestimmt.

4. Verfahren nach einem der vorstehenden Ansprüche, bei dem bei einem bestimmten Inhalt der ersten Information (I1) nachfolgend keine Datenübertragung der ersten Teilnehmerstation (UE1) erfolgt.

5. Verfahren nach einem der vorstehenden Ansprüche, bei dem die Funkstation (NodeB) wiederholt die Information über wenigstens zwei Werte (PAR1, PAR2) des Übertragungsparameters und die erste Information (I1) sendet, wobei die Wiederholrate (R1) der Information über wenigstens zwei Werte (PAR1, PAR2) des Übertragungsparameters kleiner ist als die Wiederholrate (R2) der erste Information (I1).

6. Verfahren nach Anspruch 1, bei dem
- die Funkstation (NodeB) zweite Signale (PS2) von wenigstens einer zweiten Teilnehmerstation (UE2) empfängt und anhand der zweiten Signale (PS2) ein Maß für die Übertragungsqualität der zweiten Signale bestimmt,
- und die Funkstation (NodeB) eine zweite Information (I2) an die erste Teilnehmerstation (UE1) für eine Auswahl eines der Werte (PAR1, PAR2, PAR3, PAR4) des Übertragungsparameters in Abhängigkeit von sowohl der ersten als auch der zweiten Information (I1, I2) sendet, wobei die zweite Information (I2) die Übertragungsqualität der zweiten Signale (PS2) berücksichtigt.

7. Verfahren nach Anspruch 6, bei dem
die erste und zweite Information (I1, I2) jeweils aus einem Bit gebildet werden.

8. Verfahren nach einem der Ansprüche 6 oder 7, bei dem die Funkstation (NodeB) die erste und zweite Information (I1, I2) jeweils anhand eines Vergleichs des entsprechenden Maßes für die Übertragungsqualität mit einem Grenzwert (G2) bestimmt.

9. Verfahren nach einem der Ansprüche 6, 7 oder 8, bei dem die Funkstation (NodeB) wiederholt die Information über wenigstens zwei Werte (PAR1, PAR2, PAR3, PAR4) des Übertragungsparameters sowie die erste Information (I1) und zweite Information (I2) sendet, wobei die Wiederholrate (R1) der Information über wenigstens zwei Werte (PAR1, PAR2, PAR3, PAR4) des Übertragungsparameters kleiner ist als die Wiederholrate (R2) der erste Information (I1) und die Wiederholrate (R2) der zweiten Information (I2).

10. Verfahren nach einem der Ansprüche 5 oder 9, bei dem der Wert des Grenzwertes (G1; G2) der Funkstation (NodeB) von einer Netzeinrichtung (RNC) vorgegeben wird.

11. Verfahren nach einem der Ansprüche 5, 9 oder 10, bei dem der Wert des Grenzwertes (G1; G2) in Abhängigkeit von der Anzahl von der Funkstation (NodeB) empfangener Teilnehmerstationen (UE1, UE2) festgelegt wird.

12. Verfahren nach einem der vorstehenden Ansprüche, bei dem die Funkstation (NodeB) die Information über die wenigstens zwei Werte (PAR1, PAR2, PAR3, PAR4) des Übertragungsparameters in Abhängigkeit vom Wert des Grenzwertes (G1; G2) und/oder in Abhängigkeit von der Anzahl von der Funkstation empfangener Teilnehmerstationen (UE1, UE2) und/oder in Abhängigkeit vom Rauschniveau oder Interferenzniveau der Funkstation (NodeB) und/oder der mittleren Übertragungsqualität aller empfangener Teilnehmerstationen (UE1, UE2) festlegt.

13. Verfahren nach einem der vorstehenden Ansprüche, bei dem die Funkstation (NodeB) allen von ihr empfangenen Teilnehmerstationen (UE1, UE2) die gleiche Information über wenigstens zwei Werte (PAR1, PAR2, PAR3, PAR4) des Übertragungsparameters sendet.

14. Verfahren nach einem der vorstehenden Ansprüche, bei dem Pilotsignale als Signale (PS1, PS2) zur Bestimmung eines Maßes für die Übertragungsqualität empfangen werden.

15. Verfahren zum Betrieb einer ersten Teilnehmerstation (UE1) in einem Funkkommunikationssystem, bei dem die erste Teilnehmerstation (UE1)
- eine Information über wenigstens zwei Werte (PAR1, PAR2, PAR3, PAR4) eines Übertragungsparameters für nachfolgende Datenübertragungen der Teilnehmerstation (UE1) von einer Funkstation (NodeB) empfängt,
- erste Signale (PS1) zum Bestimmen eines Maßes für die Übertragungsqualität anhand der ersten Signale (PS1) an die Funkstation (NodeB) über eine Funkschnittstelle sendet,
- eine erste Information (I1) von der Funkstation (NodeB) für eine Auswahl eines der Werte (PAR1, PAR2, PAR3, PAR4) des Übertragungsparameters empfängt, wobei die erste Information (I1) die Übertragungsqualität der ersten Signale (PS1) berücksichtigt,
- und anhand der ersten Information (I1) die Auswahl eines der Werte (PAR1, PAR2, PAR3, PAR4) des Übertragungsparameters durchführt.

16. Funkstation (NodeB) für ein Funkkommunikationssystem,
- mit Mitteln (SE) zum Senden einer Information über wenigstens zwei Werte (PAR1, PAR2, PAR3, PAR4) eines Übertragungsparameters an eine erste Teilnehmerstation (UE1) für nachfolgende Datenübertragungen der ersten Teilnehmerstation (UE1),
- mit Mitteln (SE) zum Empfangen von ersten Signalen (PS1) von der ersten Teilnehmerstation (UE1) über eine Funkschnittstelle und mit Mitteln (P) zum Bestimmen eines Maßes für die Übertragungsqualität anhand der ersten Signale (PS1),
- und mit Mitteln (SE) zum Senden einer ersten Information (I1) an die erste Teilnehmerstation (UE1), damit die erste Teilnehmerstation (UE1) eine Auswahl eines der Werte (PAR1, PAR2, PAR3, PAR4) des Übertragungsparameters anhand der ersten Information (I1) durchführt, wobei die erste Information (I1) die Übertragungsqualität der ersten Signale (PS1) berücksichtigt.

17. Teilnehmerstation (UE1, UE2) für ein Funkkommunikationssystem,
- mit Mitteln (SE1) zum Empfangen einer Information über wenigstens zwei Werte (PAR1, PAR2, PAR3, PAR4) eines Übertragungsparameters von einer Funkstation (NodeB) für nachfolgende Datenübertragungen der Teilnehmerstation (UE1),
- mit Mitteln (SE1) zum Senden von ersten Signalen (PS1) zum Bestimmen eines Maßes für die Übertragungsqualität anhand der ersten Signale (PS1) an die Funkstation (NodeB) über eine Funkschnittstelle,
- mit Mitteln (SE1) zum Empfangen einer ersten Information (I1) von der Funkstation (NodeB) für eine Auswahl eines der Werte (PAR1, PAR2, PAR3, PAR4) des Übertragungsparameters, wobei die erste Information (I1) die Übertragungsqualität der ersten Signale (PS1) berücksichtigt,
- und mit Mitteln (P1) zum Durchführen der Auswahl eines der Werte (PAR1, PAR2, PAR3, PAR4) des Übertragungsparameters anhand der ersten Information.

## Claims

1. Method for operating a radio station (NodeB) in a radio communication system, in which
- the radio station (NodeB) sends a piece of information about at least two values (PAR1, PAR2, PAR3, PAR4) of a transmission parameter to a first subscriber station (UE1) for subsequent data transmissions by the first subscriber station (UE1),
- the radio station (NodeB) receives first signals (PS1) from the first subscriber station (UE1) via a radio interface and determines a measure of the transmission quality using the first signals (PS1),
- the radio station (NodeB) sends a first piece of information (I1) to the first subscriber station (UE1) so that the first subscriber station (UE1) selects one of the values (PAR1, PAR2, PAR3, PAR4) of the transmission parameter using the first piece of information (I1), the first piece of information (I1) taking account of the transmission quality of the first signals (PS1).

2. Method according to Claim 1, in which
the first piece of information (I1) is formed from one bit.

3. Method according to one of the preceding claims, in which
the ratio station (NodeB) determines the first piece of information (I1) using a comparison between the measure of the transmission quality of the first signals (PS1) and a limit value (G1).

4. Method according to one of the preceding claims, in which for a particular content of the first piece of information (I1) there is subsequently no data transmission by the first subscriber station (UE1).

5. Method according to one of the preceding claims, in which the radio station (NodeB) repeatedly sends the piece of information about at least two values (PAR1, PAR2) of the transmission parameter and the first piece of information (I1), the repetition rate (R1) of the piece of information about at least two values (PAR1, PAR2) of the transmission parameter being lower than the repetition rate (R2) of the first piece of information (I1) .

6. Method according to Claim 1, in which
- the radio station (NodeB) receives second signals (PS2) from at least one second subscriber station (UE2) and uses the second signals (PS2) to determine a measure of the transmission quality of the second signals,
- and the radio station (NodeB) sends a second piece of information (I2) to the first subscriber station (UE1) for selection of one of the values (PAR1, PAR2, PAR3, PAR4) of the transmission parameter on the basis of both the first and the second piece of information (I1, I2), the second piece of information (I2) taking account of the transmission quality of the second signals (PS2).

7. Method according to Claim 6, in which
the first and second pieces of information (I1, I2) are respectively formed from one bit.

8. Method according to one of Claims 6 and 7, in which
the radio station (NodeB) determines the first and second pieces of information (I1, I2) respectively using a comparison between the relevant measure of the transmission quality and a limit value (G2).

9. Method according to one of Claims 6, 7 and 8, in which
the radio station (NodeB) repeatedly sends the piece of information about at least two values (PAR1, PAR2, PAR3, PAR4) of the transmission parameter and also the first piece of information (I1) and the second piece of information (12), the repetition rate (R1) of the piece of information about at least two values (PAR1, PAR2, PAR3, PAR4) of the transmission parameter being lower than the repetition rate (R2) of the first piece of information (I1) and the repetition rate (R2) of the second piece of information (I2).

10. Method according to one of Claims 5 and 9, in which
the value of the limit value (G1; G2) is prescribed for the radio station (NodeB) by a network device (RNC).

11. Method according to one of Claims 5, 9 and 10, in which
the value of the limit value (G1; G2) is stipulated on the basis of the number of subscriber stations (UE1, UE2) received by the radio station (NodeB).

12. Method according to one of the preceding claims, in which
the radio station (NodeB) stipulates the piece of information about the at least two values (PAR1, PAR2, PAR3, PAR4) of the transmission parameter on the basis of the value of the limit value (G1; G2) and/or on the basis of the number of subscriber stations (UE1, UE2) received by the radio station and/or on the basis of the noise level or interference level of the radio station (NodeB) and/or the average transmission quality of all received subscriber stations (UE1, UE2).

13. Method according to one of the preceding claims, in which the radio station (NodeB) sends the same piece of information about at least two values (PAR1, PAR2, PAR3, PAR4) of the transmission parameter to all subscriber stations (UE1, UE2) received by it.

14. Method according to one of the preceding claims, in which pilot signals are received as signals (PS1, PS2) for determining a measure of the transmission quality.

15. Method for operating a first subscriber station (UE1) in a radio communication system, in which the first subscriber station (UE1)
- receives a piece of information about at least two values (PAR1, PAR2, PAR3, PAR4) of a transmission parameter for subsequent data transmissions by the subscriber station (UE1) from a radio station (NodeB),
- sends first signals (PS1) for determining a measure of the transmission quality using the first signals (PS1) to the radio station (NodeB) via a radio interface,
- receives a first piece of information (I1) from the radio station (NodeB) for selection of one of the values (PAR1, PAR2, PAR3, PAR4) of the transmission parameter, the first piece of information (I1) taking account of the transmission quality of the first signals (PS1),
- and uses the first piece of information (I1) to select one of the values (PAR1, PAR2, PAR3, PAR4) of the transmission parameter.

16. Radio station (NodeB) for a radio communication system,
- having means (SE) for sending a piece of information about at least two values (PAR1, PAR2, PAR3, PAR4) of a transmission parameter to a first subscriber station (UE1) for subsequent data transmissions by the first subscriber station (UE1),
- having means (SE) for receiving first signals (PS1) from the first subscriber station (UE1) via a radio interface and having means (P) for determining a measure of the transmission quality using the first signals (PS1),
- and having means (SE) for sending a first piece of information (I1) to the first subscriber station (UE1) so that the first subscriber station (UE1) selects one of the values (PAR1, PAR2, PAR3, PAR4) of the transmission parameter using the first piece of information (I1), the first piece of information (I1) taking account of the transmission quality of the first signals (PS1).

17. Subscriber station (UE1, UE2) for a radio communication system,
- having means (SE1) for receiving a piece of information about at least two values (PAR1, PAR2, PAR3, PAR4) of a transmission parameter from a radio station (NodeB) for subsequent data transmissions by the subscriber station (UE1),
- having means (SE1) for sending first signals (PS1) for determining a measure of the transmission quality using the first signals (PS1) to the radio station (NodeB) via a radio interface,
- having means (SE1) for receiving a first piece of information (I1) from the radio station (NodeB) for selection of one of the values (PAR1, PAR2, PAR3, PAR4) of the transmission parameter, the first piece of information (I1) taking account of the transmission quality of the first signals (PS1),
- and having means (P1) for selecting one of the values (PAR1, PAR2, PAR3, PAR4) of the transmission parameter using the first piece of information.

## Revendications

1. Procédé pour l'exploitation d'une station radio (NodeB) d'un système de radiocommunication, dans lequel
- la station radio (NodeB) envoie une information sur au moins deux valeurs (PAR1, PAR2, PAR3, PAR4) d'un paramètre de transmission à une première station d'abonné (UE1) pour des transmissions de données consécutives de la première station d'abonné (UE1),
- la station radio (NodeB) reçoit des premiers signaux (PS1) de la première station d'abonné (UE1) au moyen d'une interface radio et détermine une mesure pour la qualité de transmission à l'aide des premiers signaux (PS1),
- la station radio (NodeB) envoie une première information (I1) à la première station d'abonné (UE1), pour que la première station d'abonné (UE1) effectue une sélection de l'une des valeurs (PAR1, PAR2, PAR3, PAR4) du paramètre de transmission à l'aide de la première information (I1), la première information (I1) tenant compte de la qualité de transmission des premiers signaux (PS1).

2. Procédé selon la revendication 1, dans lequel
la première information (I1) est formée d'un bit.

3. Procédé selon l'une quelconque des revendications précédentes, dans lequel
la station radio (NodeB) détermine la première information (I1) à l'aide d'une comparaison de la mesure pour la qualité de transmission des premiers signaux (PS1) avec une valeur limite (G1) .

4. Procédé selon l'une quelconque des revendications précédentes, dans lequel aucune transmission de données de la première station d'abonné (UE1) intervient ensuite pour un contenu déterminé de la première information (I1).

5. Procédé selon l'une quelconque des revendications précédentes, dans lequel la station radio (NodeB) envoie de façon répétée l'information sur au moins deux valeurs (PAR1, PAR2) du paramètre de transmission et la première information (I1), le taux de répétition (R1) de l'information sur au moins deux valeurs (PAR1, PAR2) du paramètre de transmission étant inférieur au taux de répétition (R2) de la première information (I1) .

6. Procédé selon la revendication 1, dans lequel
- la station radio (NodeB) reçoit des seconds signaux (PS2) d'au moins une seconde station d'abonné (UE2) et détermine à l'aide des seconds signaux (PS2) une mesure pour la qualité de transmission des seconds signaux,
- et la station radio (NodeB) envoie une seconde information (I2) à la première station d'abonné (UE1) pour une sélection de l'une des valeurs (PAR1, PAR2, PAR3, PAR4) du paramètre de transmission en fonction aussi bien de la première que de la seconde information (I1, I2), la seconde information (I2) tenant compte de la qualité de transmission des seconds signaux (PS2).

7. Procédé selon la revendication 6, dans lequel
la première et la seconde information (I1, I2) sont formées chacune d'un bit.

8. Procédé selon l'une quelconque des revendications 6 ou 7, dans lequel la station radio (NodeB) détermine la première et la seconde information (I1, I2) à chaque fois à l'aide d'une comparaison de la mesure correspondante pour la qualité de transmission avec une valeur limite (G2).

9. Procédé selon l'une quelconque des revendications 6, 7 ou 8, dans lequel la station radio (NodeB) envoie de façon répétée l'information sur au moins deux valeurs (PAR1, PAR2, PAR3, PAR4) du paramètre de transmission ainsi que la première information (I1) et la seconde information (I2), le taux de répétition (R1) de l'information sur au moins deux valeurs (PAR1, PAR2, PAR3, PAR4) du paramètre de transmission étant inférieur au taux de répétition (R2) de la première information (I1) et au taux de répétition (R2) de la seconde information (I2).

10. Procédé selon l'une des revendications 5 ou 9, dans lequel la valeur de la valeur limite (G1 ; G2) de la station radio (NodeB) est prédéfinie par un dispositif de réseau (RNC).

11. Procédé selon l'une quelconque des revendications 5, 9 ou 10, dans lequel la valeur de la valeur limite (G1 ; G2) est définie en fonction du nombre de stations d'abonné (UE1, UE2) reçues de la station radio (NodeB).

12. Procédé selon l'une quelconque des revendications précédentes, dans lequel la station radio (NodeB) définit l'information sur les aux moins deux valeurs (PAR1, PAR2, PAR3, PAR4) du paramètre de transmission en fonction de la valeur de la valeur limite (G1, G2) et/ou en fonction du nombre de stations d'abonné (UE1, UE2) reçues de la station radio et/ou en fonction du niveau de bruit ou du niveau d'interférence de la station radio (NodeB) et/ou de la qualité de transmission moyenne de toutes les stations d'abonné (UE1, UE2) reçues.

13. Procédé selon l'une quelconque des revendications précédentes, dans lequel la station radio (NodeB) envoie à toutes les stations d'abonné (UE1, UE2) reçues par la station radio la même information sur au moins deux valeurs (PAR1, PAR2, PAR3, PAR4) du paramètre de transmission.

14. Procédé selon l'une quelconque des revendications précédentes, dans lequel des signaux pilotes sont reçus comme signaux (PS1, PS2) pour la détermination d'une mesure pour la qualité de transmission.

15. Procédé pour l'exploitation d'une première station d'abonné (UE1) dans un système de radiocommunication, dans lequel la première station d'abonné (UE1)
- reçoit une information sur au moins deux valeurs (PAR1, PAR2, PAR3, PAR4) d'un paramètre de transmission pour des transmissions de données consécutives de la station d'abonné (UE1) d'une station radio (NodeB),
- envoie des premiers signaux (PS1) pour la détermination d'une mesure pour la qualité de transmission à l'aide des premiers signaux (PS1) à la station radio (NodeB) au moyen d'une interface radio,
- reçoit une première information (I1) de la station radio (NodeB) pour une sélection de l'une des valeurs (PAR1, PAR2, PAR3, PAR4) du paramètre de transmission, la première information (I1) tenant compte de la qualité de transmission des premiers signaux (PS1),
- et effectue à l'aide de la première information (I1) la sélection de l'une des valeurs (PAR1, PAR2, PAR3, PAR4) du paramètre de transmission.

16. Station radio (NodeB) pour un système de radiocommunication,
- comprenant des moyens (SE) pour envoyer une information sur au moins deux valeurs (PAR1, PAR2, PAR3, PAR4) d'un paramètre de transmission à une première station d'abonné (UE1) pour des transmissions de données consécutives de la première station d'abonné (UE1),
- des moyens (SE) pour la réception de premiers signaux (PS1) de la première station d'abonné (UE1) au moyen d'une interface radio et des moyens (P) pour la détermination d'une mesure pour la qualité de transmission à l'aide des premiers signaux (PS1),
- et des moyens (SE) pour l'envoi d'une première information (I1) à la première station d'abonné (UE1), pour que la première station d'abonné (UE1) effectue une sélection de l'une des valeurs (PAR1, PAR2, PAR3, PAR4) du paramètre de transmission à l'aide de la première information (I1), la première information (I1) tenant compte de la qualité de transmission des premiers signaux (PS1).

17. Station d'abonné (UE1, UE2) pour un système de radiocommunication, comprenant
- des moyens (SE1) pour la réception d'une information sur au moins deux valeurs (PAR1, PAR2, PAR3, PAR4) d'un paramètre de transmission d'une station radio (NodeB) pour des transmissions de données consécutives de la station d'abonné (UE1),
- des moyens (SE1) pour l'envoi de premiers signaux (PS1) pour la détermination d'une mesure pour la qualité de transmission à l'aide des premiers signaux (PS1) à la station radio (NodeB) au moyen d'une interface radio,
- des moyens (SE1) pour la réception d'une première information (I1) de la station radio (NodeB) pour une sélection de l'une des valeurs (PAR1, PAR2, PAR3, PAR4) du paramètre de transmission, la première information (I1) tenant compte de la qualité de transmission des premiers signaux (PS1),
- et des moyens (P1) pour la mise en oeuvre de la sélection de l'une des valeurs (PAR1, PAR2, PAR3, PAR4) du paramètre de transmission à l'aide de la première information.
